# EUROPEAN PATENT APPLICATION

(11) **EP 4 742 353 A1**
(43) Date of publication of application: **13.05.2026**
(21) Application number: 24913648.2
(22) Date of filing: 27.12.2024
(51) Int. Cl.: H01M 10/0562, C01B 25/14, C01B 25/10, H01M 10/052

(54) **SULFIDE-BASED SOLID ELECTROLYTE, METHOD FOR PREPARING SULFIDE-BASED SOLID ELECTROLYTE AND ALL-SOLID-STATE BATTERY INCLUDING SULFIDE-BASED SOLID ELECTROLYTE**

(30) Priority: 27.12.2023 JP 2023221544
(71) Applicant: LG Energy Solution, Ltd., Seoul 07335 (KR)
(72) Inventor: NARIMATSU, Eiichiro, Yokohama-shi, Kanagawa 220--0011 (JP); MATSUBARA, Keiko, Yokohama-shi, Kanagawa 220--0011 (JP)
(74) Representative: Goddar, Heinz J.
(86) International application number: PCT/KR2024/021230
(87) International publication number: WO 2025/143843

(57) **Abstract**

The present disclosure is directed to providing a sulfide-based solid electrolyte having improved ion conductivity, a method for preparing a sulfide-based solid electrolyte, and an all-solid-state battery including a sulfide-based solid electrolyte. The present disclosure provides a sulfide-based solid electrolyte containing a Group 3 element and having an argyrodite-type crystal structure, the sulfide-based solid electrolyte being represented by the chemical formula of Li_{7-x-3y}M_{y}PS₆₋ₓHaₓ, wherein M is at least one element selected from Group 3 elements, Ha is at least one element selected from halogen elements, and x and y satisfy 1.0 < x < 2.5 and 0 < y ≤ 0.2.

## Description

### TECHNICAL FIELD

The present disclosure relates to a sulfide-based solid electrolyte, a method for preparing a sulfide-based solid electrolyte, and an all-solid-state battery including a sulfide-based solid electrolyte.

This application is based on and claims priority from Japanese Patent Application No. 2023-221544 filed on December 27, 2023, the disclosure of which is incorporated herein in its entirety by reference.

### BACKGROUND ART

Development of all-solid-state batteries using a solid electrolyte substituting for a liquid electrolyte of lithium-ion batteries has been conducted in order to provide batteries with high safety, long service life and high energy density. Among many types of solid electrolytes, a sulfide-based solid electrolyte, such as Li₁₀GeP₂S₁₂, has high ion conductivity close to the ion conductivity of a liquid electrolyte and is soft, and thus is advantageous in that it is easy to obtain close adhesive property to an active material. Therefore, commercialization of all-solid-state batteries using a sulfide-based solid electrolyte has been expected.

Since lithium metal can increase energy density per weight (Wh/kg) by virtue of its low weight per unit volume and high theoretical capacity, it has been given many attentions as a negative electrode material of an all-solid-state battery. However, a sulfide-based solid electrolyte, such as Li₁₀GeP₂S₁₂, has low stability to lithium metal, and thus is problematic in that it has a difficulty in using together with a lithium metal negative electrode.

To solve the above-mentioned problem, Patent documents 1 to 3 disclose a sulfide-based solid electrolyte which has an argyrodite-type crystal structure represented by Li_{7-x-2y}PS_{6-x-y}Clₓ and is stable against lithium metal. Patent document 4 discloses a sulfide-based solid electrolyte having improved stability to lithium metal by precisely controlling the composition of a sulfide-based solid electrolyte having a crystal structure represented by Li₁₀GeP₂S₁₂.

However, according to the related art, there is a problem in that the sulfide-based solid electrolytes have low ion conductivity.

### DISCLOSURE

### Technical Problem

The present disclosure is directed to providing a sulfide-based solid electrolyte having improved ion conductivity, a method for preparing a sulfide-based solid electrolyte, and an all-solid-state battery including a sulfide-based solid electrolyte.

### Technical Solution

In one aspect of the present disclosure,
there is provided a sulfide-based solid electrolyte containing a Group 3 element and having an argyrodite-type crystal structure,
the sulfide-based solid electrolyte being represented by the chemical formula of Li_{7-x-3y}M_{y}PS₆₋ₓHaₓ,
wherein M is at least one element selected from Group 3 elements, Ha is at least one element selected from halogen elements, and x and y satisfy 1.0 < x < 2.5 and 0 < y ≤ 0.2.

According to an embodiment, M may be Y and 0 < y < 0.2.

According to an embodiment, M may be La.

According to an embodiment, y may satisfy 0 < y < 0.05.

According to an embodiment, Ha may include Br.

According to an embodiment, x may satisfy 1.3 ≤ x ≤ 2.0.

According to an embodiment, the sulfide-based solid electrolyte may have a lattice volume of 940-980 Å³.

In another aspect of the present disclosure, there is provided a method for preparing the sulfide-based solid electrolyte as defined in any one of the above-described embodiments, including the steps of:
mixing a lithium source, a Group 3 element source, a phosphorus source, a sulfur source and a halogen source to obtain a mixture, and
firing the mixture at a temperature of 250-600°C.

In still another aspect of the present disclosure, there is provided an all-solid-state battery including a positive electrode, a negative electrode and a solid electrolyte layer,
wherein the solid electrolyte layer includes the sulfide-based solid electrolyte as defined in any one of the above-described embodiments.

### Advantageous Effects

The present disclosure can provide a sulfide-based solid electrolyte having improved ion conductivity, a method for preparing a sulfide-based solid electrolyte, and an all-solid-state battery including a sulfide-based solid electrolyte.

### DESCRIPTION OF DRAWINGS

FIG. 1 is an X-ray diffractometry (XRD) pattern of each of Examples 1 to 3 and Comparative Examples 1 and 2.
FIG. 2 is an XRD pattern of each of Examples 4 to 7 and Comparative Example 2.
FIG. 3 is a graph illustrating lithium-ion conductivity depending on the composition of a sulfide-based solid electrolyte.

### BEST MODE

Hereinafter, the present disclosure will be described in more detail.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

### [Solid electrolyte for all-solid-state battery]

A solid electrolyte for an all-solid-state battery according to an embodiment of the present disclosure may include at least one of a sulfide-based solid electrolyte, an oxide-based solid electrolyte and a polymer-based solid electrolyte. Preferably, the solid electrolyte for an all-solid-state battery according to an embodiment of the present disclosure is a sulfide-based solid electrolyte. The solid electrolyte for an all-solid-state battery may be incorporated to a positive electrode mixture and used as a material of a positive electrode, may be incorporated to a negative electrode mixture and used as a material of a negative electrode, or may be used as a separator. The solid electrolyte for an all-solid-state battery may further include additives, such as a lithium salt, a conductive material, a binder resin, or the like, depending on the particular use.

### <Sulfide-based solid electrolyte>

The sulfide-based solid electrolyte is not particularly limited, as long as it contains sulfur (S), and any known sulfide-based solid electrolyte may be used.

The sulfide-based solid electrolyte may have a crystal structure. The sulfide-based solid electrolyte having a crystal structure accelerates lithium-ion conduction to provide high lithium-ion conductivity.

The sulfide-based solid electrolyte may have an argyrodite-type, NASICON type, perovskite type, garnet type or LiGePS type crystal structure. Preferably, the sulfide-based solid electrolyte may have an argyrodite-type crystal structure. The sulfide-based solid electrolyte having an argyrodite-type crystal structure has high stability to lithium metal, and thus lithium metal having high energy density per weight may be used as a negative electrode material.

The sulfide-based solid electrolyte may be amorphous, vitreous or glass-ceramic.

The sulfide-based solid electrolyte may have ion conductivity of metals that belong to Group 1 or Group 2 in the Periodic Table, and may include Li-P-S type glass or Li-P-S type glass-ceramic. Non-limiting examples of the sulfide-based solid electrolyte may include Li₂S-P₂S₃, Li₂S-LiI-P₂S₅, Li₂S-LiI-Li₂O-P₂S₃, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, Li₂S-GeS₂-ZnS, or the like, and the sulfide-based solid electrolyte may include one or more of them. However, the scope of the present disclosure is not particularly limited thereto.

The sulfide-based solid electrolyte may include a crystalline phase and an amorphous phase. The sulfide-based solid electrolyte may include a crystalline phase containing an argyrodite-type crystal structure (also referred to as 'argyrodite phase' hereinafter) and the other phases (also referred to as 'impurity phases' or 'unknown phases' hereinafter). Preferably, the argyrodite-type crystal structure is a cubic system. The other phases may be crystalline phases or amorphous phases. The other phases may include a Li₂S phase, P₂S₅ phase, LiCl phase, LiBr phase, Li₃PS₄ phase, Sc₂S₃ phase, Y₂S₃ phase, La₂S₃ phase, Ac₂S₃ phase, or the like, regardless of crystalline phases or amorphous phases. Preferably, the sulfide-based solid electrolyte does not include or substantially does not include any impurity phase other than the argyrodite phase. In other words, the sulfide-based solid electrolyte preferably includes the argyrodite phase alone. When the sulfide-based solid electrolyte does not include or substantially does not include any impurity phase, lithium-ion conduction is not easily inhibited, and thus the sulfide-based solid electrolyte may have high lithium-ion conductivity.

The ratio of the crystalline phase contained in the sulfide-based solid electrolyte may be evaluated quantitatively or semi-quantitatively from an X-ray diffractometry (XRD) pattern. As an evaluation method, the ratio of the crystalline phase may be evaluated by comparing the peak intensities (heights or areas) of the XRD pattern.

The sulfide-based solid electrolyte according to an embodiment of the present disclosure is represented by the chemical formula of Li_{7-x-3y}M_{y}PS₆₋ₓHaₓ, wherein M is at least one element selected from Group 3 elements, Ha is at least one element selected from halogen elements, and x and y satisfy 1.0 < x < 2.5 and 0 < y ≤ 0.2. Such a sulfide-based solid electrolyte may have high lithium-ion conductivity.

In the sulfide-based solid electrolyte according to an embodiment of the present disclosure, lithium in Li₇₋ₓPS₆₋ₓHaₓ is partially substituted with a Group 3 element (M) capable of being converted into a trivalent cation. The Group 3 element (M) substituting for lithium may be at least one selected from the group consisting of scandium (Sc), yttrium (Y), lanthanum (La) and actinium (Ac). Lithium (Li) has an ion radius (hexa-coordinated) of 76 pm, and scandium (Sc), yttrium (Y), lanthanum (La) and actinium (Ac) have an ion radius (hexa-coordinated) of 88 pm, 104 pm, 117 ppm and 126 pm, respectively. Based on the valence number of an element, three lithium elements may be substituted with one Group 3 element (M). A lithium site vacancy is generated through the substitution with a Group 3 element (M), which can improve lithium-ion conductivity. In addition, the sulfide-based solid electrolyte undergoes a change in lattice constants and lattice volume through the substitution with a Group 3 element (M), and thus may have a crystal structure suitable for lithium-ion conduction.

In addition, the sulfide-based solid electrolyte according to an embodiment of the present disclosure may be formed through the penetration of a Group 3 element (M) capable of being converted into a trivalent cation into the crystal lattice of Li₇₋ₓPS₆₋ₓHaₓ. The Group 3 element penetrating into the crystal structure may be at least one selected from the group consisting of scandium (Sc), yttrium (Y), lanthanum (La) and actinium (Ac). Scandium (Sc), yttrium (Y), lanthanum (La) and actinium (Ac) may be used alone or in combination. The sulfide-based solid electrolyte undergoes a change in lattice constants and lattice volume through the penetration of the Group 3 element (M) into the crystal lattice of Li₇₋ₓPS₆₋ₓHaₓ, and thus the sulfide-based solid electrolyte may have a crystal structure suitable for lithium-ion conduction.

Preferably, the Group 3 element is yttrium (Y) and/or lanthanum (La), more preferably yttrium (Y). When the Group 3 element is yttrium (Y) and/or lanthanum (La), the sulfide-based solid electrolyte may have a high degree of crystallization, so that it may have high ion conductivity.

The doping amount (y) of a Group 3 element (M) in the chemical formula of Li_{7-x-3y}M_{y}PS₆₋ₓHaₓ satisfies 0 < y ≤ 0.2. Preferably, y satisfies 0 < y < 0.05.

When the Group 3 element is yttrium (Y), y preferably satisfies 0 < y < 2, more preferably 0 < y ≤ 0.1, even more preferably 0 < y ≤ 0.05, even further more preferably 0 < y ≤ 0.025, and most preferably 0.01 ≤ y ≤ 0.02.

When the Group 3 element is lanthanum (La), y preferably satisfies 0 < y < 2, more preferably 0 < y ≤ 0.1, even more preferably 0 < y ≤ 0.05, and most preferably 0.01 ≤ y ≤ 0.03.

When y satisfies the above-defined range, the sulfide-based solid electrolyte may have high ion conductivity. When y is 0, it is not possible to obtain a change in crystal structure derived from the substitution with a Group 3 element (M), resulting in low ion conductivity. When y is larger than 0.2, the sulfide-based solid electrolyte cannot retain an argyrodite-type crystal structure, and impurity phases inhibiting lithium-ion conduction are increased in the sulfide-based solid electrolyte, resulting in degradation of ion conductivity.

The halogen (Ha) in the chemical formula of Li_{7-x-3y}M_{y}PS₆₋ₓHaₓ is at least one element selected from halogen elements. Preferably, the halogen (Ha) includes bromine (Br). More preferably, the halogen (Ha) includes chlorine (Cl) and bromine (Br). Sulfur (S) as a divalent anion shows stronger force of drawing lithium ions as compared to a monovalent halogen ion, and thus can inhibit lithium-ion movement significantly. When the halogen includes bromine (Br), the share of sulfur (S) at a specific site in the argyrodite-type crystal structure is reduced and the share of halogen at the corresponding site is increased, and thus lithium-ion mobility may become active around the bromine (Br) site. As a result, lithium-ion conductivity can be improved. In addition, bromine (Br) may be bound with Li in the sulfide-based solid electrolyte to form lithium bromide (LiBr), which is a water-absorbing substance. Lithium bromide (LiBr) absorbs water that may cause degradation of lithium-ion conductivity, thereby improving the lithium-ion conductivity of the sulfide-based solid electrolyte.

The ratio (x) of halogen (Ha) in the chemical formula of Li_{7-x-3y}M_{y}PS₆₋ₓHaₓ satisfies 1.0 < x < 2.5, preferably 1.1 ≤ x ≤ 2.3, more preferably 1.3 ≤ x ≤ 2.0, and even more preferably 1.3 ≤ x ≤ 1.8. When x satisfies the above-defined range, the argyrodite-type crystal structure is stabilized, and thus the sulfide-based solid electrolyte may have high ion conductivity.

The stoichiometric composition of the sulfide-based solid electrolyte according to an embodiment of the present disclosure is significantly important. Therefore, a sulfide-based solid electrolyte not represented by the chemical formula of Li_{7-x-3y}M_{y}PS₆₋ₓHaₓ does not fall within the sulfide-based solid electrolyte according to the present disclosure. The sulfide-based solid electrolyte not represented by the chemical formula of Li_{7-x-3y}M_{y}PS₆₋ₓHaₓ may include a large amount of impurities and have poor crystallinity.

For example, a reference composition, Li_{5.3}Y_{0.1}PS_{4.5}Cl_{0.8}Br_{0.8}, is a sulfide-based solid electrolyte containing yttrium (Y), and when it is applied to the chemical formula of Li_{7-x-3y}M_{y}PS₆₋ₓHaₓ, it can be assumed that x = 1.6 from the content of chlorine (Cl) and bromine (Br) as halogens. However, in this case, when applied to the above chemical formula from the content of sulfur (S), S_{4.4} is derived, which is different from S_{4.5} in the reference composition. In addition, it can be assumed that y = 0.1 from the content of yttrium (Y). However, in this case, when applied to the above chemical formula from the content of lithium (Li), Li_{5.1} is derived, which is different from Li_{5.3} in the reference composition.

The ion conductivity of the sulfide-based solid electrolyte may be affected by the degree of crystallization thereof. The degree of crystallization may be evaluated from the XRD pattern. In the XRD pattern, when any phase (crystalline phase or amorphous phase, such as Li₂S phase, P₂S₅ phase, LiCl phase, LiBr phase, Li₃PS₄ phase, ScS₃ phase, Y₂S₃ phase, La₂S₃ phase, Ac₂S₃ phase, or the like) other than the argyrodite crystalline phase is not observed or is not substantially observed, the sulfide-based solid electrolyte may have high ion conductivity.

The lattice volume of the sulfide-based solid electrolyte may be changed by the substitution of a lithium site with a Group 3 element (M). Although it is not bound to any specific theory, the Group 3 element (M) shows the properties of a trivalent cation and has strong interaction with another anion present in the sulfide-based solid electrolyte, resulting in a change, i.e. increase or decrease, in lattice volume. Such a change in lattice volume results in a crystal structure suitable for lithium-ion conduction, and thus the sulfide-based solid electrolyte may have high ion conductivity.

The sulfide-based solid electrolyte may have a lattice volume of 940-980 Å³, preferably 950-970 Å³, more preferably 954-966 Å³, and even more preferably 955-964 Å³. The lattice constants and lattice volume may be evaluated from an XRD pattern. The lattice volume of the sulfide-based solid electrolyte may be changed depending on firing temperature even under the same composition. When the lattice volume satisfies the above-defined range, lithium-ion conduction in the sulfide-based solid electrolyte is accelerated, and thus the sulfide-based solid electrolyte may have high ion conductivity.

Unless otherwise stated, the ion conductivity (also referred to as 'lithium-ion conductivity' hereinafter) of the sulfide-based solid electrolyte refers to the ion conductivity thereof at room temperature (25°C, 298K) under ambient pressure (1 atm). When the sulfide-based solid electrolyte is used in an all-solid-state battery, it is practically preferred that the ion conductivity is 4 mS/cm or more. The sulfide-based solid electrolyte according to an embodiment of the present disclosure has an ion conductivity of 1.5 mS/cm or more, preferably 4 mS/cm or more, more preferably 8 mS/cm or more, even more preferably 10.8 mS/cm or more, and most preferably 11.5 mS/cm or more.

The sulfide-based solid electrolyte according to an embodiment of the present disclosure may be obtained by a method including the steps of: mixing a lithium source, a Group 3 element source, a phosphorus source, a sulfur source and a halogen source to obtain a mixture; and firing the mixture at a temperature of 250-600°C. The step of firing the mixture may be carried out under inert atmosphere, such as argon gas, nitrogen gas, or the like.

Each of the lithium source, Group 3 element source, phosphorus source, sulfur source and halogen source may be a compound, such as sulfide, oxide, nitride, or the like. Lithium sulfide (Li₂S) may be used as a lithium source, diphosphorus pentasulfide (P₂S₅) may be used as a phosphorus source, and a lithium halide (LiHa), such as lithium chloride (LiCl), lithium bromide (LiBr), or the like, may be used as a halogen source. For example, the Group 3 element source may be a sulfide. In a variant, sulfur may be supplied from a source of another element. In other words, at least one of the lithium source, Group 3 element source, phosphorous source and halogen source may also function as a sulfur source.

In the case of a sulfide-based solid electrolyte having an argyrodite-type crystal structure, the firing temperature is preferably 350-550°C, more preferably 380-500°C, and even more preferably 410-450°C. When the firing temperature satisfies the above-defined range, formation of the argyrodite-type crystal structure may be accelerated, and thus the sulfide-based solid electrolyte may have a high degree of crystallization. Therefore, it is possible to obtain a sulfide-based solid electrolyte having high ion conductivity.

### [All-solid-state battery]

The sulfide-based solid electrolyte according to an embodiment of the present disclosure may be used as an electrolyte for an all-solid-state battery in an all-solid-state battery including a positive electrode, a negative electrode and a solid electrolyte layer. The sulfide-based solid electrolyte according to an embodiment of the present disclosure may be used together with the active material in the electrode active material layer of each of the positive electrode and the negative electrode. The solid electrolyte for an all-solid-state battery may be used as a material of the solid electrolyte layer. The electrolyte for an all-solid-state battery may have an average particle diameter controlled depending on the particular use. It is possible to improve the ion conductivity by controlling the average particle diameter of the electrolyte for an all-solid-state battery.

### <Solid electrolyte layer>

According to an embodiment of the present disclosure, the solid electrolyte layer may have a thickness of about 50 µm or less, preferably about 15-50 µm. Within the above-defined range, the solid electrolyte layer may have a suitable thickness considering the ion conductivity, physical strength, energy density of an applicable battery, or the like. For example, in terms of the ion conductivity or energy density, the thickness may be 10 µm or more, 20 µm or more, or 30 µm or more. Meanwhile, in terms of the physical strength, the thickness may be 50 µm or less, 45 µm or less, or 40 µm or less. In addition, while the solid electrolyte layer has the above-defined range of thickness, it may have a tensile strength of about 100-2,000 kgf/cm². Further, the solid electrolyte layer may have a porosity of 15 vol% or less, or about 10 vol% or less. In this manner, even though the solid electrolyte layer according to an embodiment of the present disclosure is a thin film, it may have high mechanical strength.

### <Positive electrode and negative electrode>

According to an embodiment of the present disclosure, each of the positive electrode and the negative electrode includes a current collector, and an electrode active material layer formed on at least one surface of the current collector, wherein the electrode active material layer includes a plurality of electrode active material particles and a solid electrolyte. If necessary, the electrode may further include at least one of a conductive material and a binder resin. Additionally, the electrode may further include various additives in order to supplement or improve the physical/chemical properties of the electrode.

According to an embodiment of the present disclosure, the negative electrode active material may be any material, as long as it can be used as a negative electrode active material for a lithium-ion secondary battery. Particular examples of the negative electrode active material may include at least one selected from: carbon, such as non-graphitizable carbon or graphite-based carbon; metal composite oxides, such as LiₓFe₂O₃ (0 ≤ x ≤ 1), LiₓWO₂ (0 ≤ x ≤ 1), SnₓMe₁₋ₓMe'_{y}O_{z} (Me: Mn, Fe, Pb, Ge; Me': Al, B, P, Si, elements of Group 1, 2 or 3 in the Periodic Table, halogen; 0 < x ≤ 1; 1 ≤ y ≤ 3; 1 ≤ z ≤ 8); lithium metal; lithium alloy; silicon metal; silicon-based alloy; indium metal; indium alloy; tin-based alloy; metal oxides, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymers, such as polyacetylene; Li-Co-Ni type materials; titanium oxide; lithium titanium oxide; or the like. According to an embodiment of the present disclosure, the negative electrode active material may include a carbonaceous material and/or Si.

In the case of the positive electrode, the electrode active material may be any material with no particular limitation, as long as it can be used as a positive electrode active material for a lithium-ion secondary battery. For example, the positive electrode active material may include, but are not limited to: layered compounds, such as lithium cobalt oxide (LiCoO₂) and lithium nickel oxide (LiNiO₂), or those compounds substituted with one or more transition metals; lithium manganese oxides, such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); vanadium oxides such as LiV₃O₈, LiV₃O₄, V₂O₅ or Cu₂V₂O₇; Ni-site type lithium nickel oxides represented by the chemical formula of LiNi₁₋ₓAₓO₂ (A is Co, Mn, Al, Cu, Fe, Mg, B or Ga, and x is 0.01-0.3); lithium manganese composite oxides represented by the chemical formula of LiMn₂₋ₓAₓO₂ (A is Co, Ni, Fe, Cr, Zn or Ta, x is 0.01-0.1) or Li₂Mn₃AO₈ (A is Fe, Co, Ni, Cu or Zn); lithium manganese composite oxides having a spinel structure and represented by the formula of LiNiₓMn₂₋ₓO₄; NCM-based composite oxides represented by the chemical formula of Li(NiₐCo_{b}Mn_{c})O₂ (wherein each of a, b and c represents the atomic fraction of an independent element, 0 < a < 1, 0 < b < 1, 0 < c < 1, and a + b + c = 1); LiMn₂O₄ in which Li is partially substituted with an alkaline earth metal ion; disulfide compounds; Fe₂(MoO₄)₃; or the like.

According to an embodiment of the present disclosure, the current collector may be a current collector, such as a metal plate, having electron conductivity and known in the field of secondary batteries, and selected suitably depending on the polarity of an electrode.

According to an embodiment of the present disclosure, the conductive material is added generally in an amount of 1-30 wt% based on the total weight of the mixture including the electrode active material. The conductive material is not particularly limited, as long as it causes no chemical change in the corresponding battery and has conductivity. For example, the conductive material may include any one selected from: graphite, such as natural graphite or artificial graphite; carbon black, such as carbon black, acetylene black, ketjen black, channel black, furnace black, lamp black or thermal black; conductive fibers, such as carbon fibers or metallic fibers; carbon fluoride; metal powder, such as aluminum or nickel powder; conductive whisker, such as zinc oxide or potassium titanate; conductive metal oxide, such as titanium oxide; and conductive materials, such as polyphenylene derivatives, or a mixture of two or more of them.

According to an embodiment of the present disclosure, the binder resin is not particularly limited, as long as it is an ingredient that assists binding of the active material with the conductive material, and binding to the current collector. Particular examples of the binder resin may include polyvinylidene fluoride, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer (EPDM), sulfonated EPDM, styrene butadiene rubber, fluororubber, various copolymers, or the like. In general, the binder resin may be used in an amount of 1-30 wt%, or 1-10 wt%, based on 100 wt% of electrode active material layer.

According to an embodiment of the present disclosure, the electrode active material layer may further include at least one additive, such as an oxidation stabilizing additive, a reduction stabilizing additive, a flame retardant, a heat stabilizer, an anti-fogging agent, or the like.

In still another aspect of the present disclosure, there is provided a secondary battery having the above-described structure. There are also provided a battery module including the battery as a unit cell, a battery pack including the battery module, and a device including the battery pack as a power source. Herein, particular examples of the device may include, but are not limited to: power tools driven by an electric motor; electric cars, including electric vehicles (EVs), hybrid electric vehicles (HEVs), plug-in hybrid electric vehicles (PHEVs), or the like; electric carts, including electric bikes (E-bikes) and electric scooters (E-scooters); electric golf carts; electric power storage systems; or the like.

Hereinafter, the present disclosure will be described in more detail with reference to examples. However, the following examples are for illustrative purposes only and the scope of the present disclosure is not limited thereto.

### Example 1

First, as sources, used were lithium sulfide (Li₂S, available from Mitsuwa Chemical), diphosphorus pentasulfide (P₂S₅, available from Aldrich), yttrium sulfide (Y₂S₃, available from Japan Pure Chemical), lithium chloride (LiCl, available from Aldrich) and lithium bromide (LiBr, available from Aldrich). The sources were weighed and mixed with a mortar in a glove box under argon gas atmosphere to a composition of Li_{5.4-3y}M_{y}PS_{4.4}Cl_{1.0}Br_{0.6} (doping amount of a Group 3 element (M), y = 0.0125), and thus a mixed powder was obtained. The resultant mixed powder was introduced to a ZrO₂ pot together with ZrO₂ balls to provide a sealed pot. The sealed pot is installed in a planetary ball mill device, a ball milling was carried out at 380 rpm for 20 hours, and then the pot was opened in the glove box to recover the powder. The resultant powder was placed and sealed in a carbon crucible, and then was fired at a temperature of 430°C for 8 hours, while allowing argon gas to flow. The fired powder was pulverized with a mortar for 10 minutes to obtain a solid electrolyte.

### Example 2

A solid electrolyte was obtained in the same manner as Example 1, except that the doping amount (y) of the Group 3 element (M) was changed to 0.025, as shown in Table 1.

### Example 3

A solid electrolyte was obtained in the same manner as Example 1, except that the doping amount (y) of the Group 3 element (M) was changed to 0.075, as shown in Table 1.

### Comparative Example 1

A solid electrolyte was obtained in the same manner as Example 1, except that the doping amount (y) of the Group 3 element (M) was changed to 0.2, as shown in Table 1.

### Example 4

A solid electrolyte was obtained in the same manner as Example 1, except that lanthanum sulfide (La₂S₃, available from Japan Pure Chemical) was used instead of yttrium sulfide (Y₂S₃, available from Japan Pure Chemical) as a source of a Group 3 element (M), as shown in Table 1.

### Example 5

A solid electrolyte was obtained in the same manner as Example 4, except that the doping amount (y) of the Group 3 element (M) was changed to 0.025, as shown in Table 1.

### Example 6

A solid electrolyte was obtained in the same manner as Example 4, except that the doping amount (y) of the Group 3 element (M) was changed to 0.075, as shown in Table 1.

### Example 7

A solid electrolyte was obtained in the same manner as Example 4, except that the doping amount (y) of the Group 3 element (M) was changed to 0.2, as shown in Table 1.

### Comparative Example 2

A solid electrolyte was obtained in the same manner as Example 1, except that no Group 3 element (M) was added, i.e. the doping amount (y) of the Group 3 element (M) was changed to 0, as shown in Table 1.

### Comparative Example 3

First, as sources, used were lithium sulfide (Li₂S, available from Mitsuwa Chemical), diphosphorus pentasulfide (P₂S₅, available from Aldrich), yttrium sulfide (Y₂S₃, available from Japan Pure Chemical), lithium chloride (LiCl, available from Aldrich) and lithium bromide (LiBr, available from Aldrich). The sources were weighed and mixed with a mortar in a glove box under argon gas atmosphere to a composition of Li_{5.3}Y_{0.1}PS_{4.5}Cl_{0.8}Br_{0.8}, and thus a mixed powder was obtained. The resultant mixed powder was introduced to a ZrO₂ pot together with ZrO₂ balls to provide a sealed pot. The sealed pot is installed in a planetary ball mill device, a ball milling was carried out at 380 rpm for 20 hours, and then the pot was opened in the glove box to recover the powder. The resultant powder was placed and sealed in a carbon crucible, and then was fired at a temperature of 430°C for 8 hours, while allowing argon gas to flow. The fired powder was pulverized with a mortar for 10 minutes to obtain a solid electrolyte.

### Comparative Example 4

First, as sources, used were lithium sulfide (Li₂S, available from Mitsuwa Chemical), diphosphorus pentasulfide (P₂S₅, available from Aldrich), lanthanum (III) sulfide (La₂S₃, available from Kojundo Chemical Laboratory) and lithium chloride (LiCl, available from Aldrich). The sources were weighed and mixed with a mortar in a glove box under argon gas atmosphere to a composition of Li_{6.15}La_{0.075}P_{0.925}S₅Cl, and thus a mixed powder was obtained. The resultant mixed powder was introduced to a ZrO₂ pot together with ZrO₂ balls to provide a sealed pot. The sealed pot is installed in a planetary ball mill device, a ball milling was carried out at 380 rpm for 20 hours, and then the pot was opened in the glove box to recover the powder. The resultant powder was placed and sealed in a carbon crucible, and then was fired at a temperature of 430°C for 8 hours, while allowing argon gas to flow. The fired powder was pulverized with a mortar for 10 minutes to obtain a solid electrolyte.

**[Table 1]**

| Sample | Firing temperature, time | Designed composition | | Crystalline phase | | Lattice constant A = b = c (Å) | Lattice volume (Å³) | Half width (°) | Ion conductivity (σ 298K) (mS/cm) |
|---|---|---|---|---|---|---|---|---|---|
| | (°C), (h) | M | y | Argyrodite | Impurity | | | | |
| Ex. 1 | 430, 8 h | Y | 0.0125 | ○ | - | 9.8518 | 956.2 | 0.07 | 11.7 |
| Ex. 2 | 430, 8 h | Y | 0.025 | ○ | △ | 9.8587 | 958.2 | 0.07 | 10.8 |
| Ex. 3 | 430, 8 h | Y | 0.075 | ○ | △ | 9.8540 | 956.8 | 0.07 | 5.28 |
| Comp. Ex. 1 | 430, 8 h | Y | 0.2 | △ | X | Not available | Not available | Not available | 0.000061 |
| Ex. 4 | 430, 8 h | La | 0.0125 | ○ | △ | 9.8773 | 963.6 | 0.08 | 10.8 |
| Ex. 5 | 430, 8 h | La | 0.025 | ○ | △ | 9.8711 | 961.8 | 0.07 | 11.6 |
| Ex. 6 | 430, 8 h | La | 0.075 | ○ | △ | 9.8674 | 960.7 | 0.09 | 2.84 |
| Ex. 7 | 430, 8 h | La | 0.2 | ○ | △ | 9.8542 | 956.9 | 0.08 | 5.57 |
| Comp. Ex. 2 | 430, 8 h | - | 0 | ○ | - | 9.9471 | 984.2 | 0.08 | 10.7 |

| | | | | | | | | | |
|---|---|---|---|---|---|---|---|---|---|
| O: exists in a large amount △: exists in a trace amount X: impurities exist in a large amount -: exists little | | | | | | | | | |

**[Table 2]**

| Sample | Firing temperature, time | Designed composition | Crystalline phase | | Ion conductivity (σ 298K) (mS/cm) |
|---|---|---|---|---|---|
| | (°C), (h) | | Argyrodite | Impurity | |
| Comp. Ex. 3 | 430, 8 h | Li_{5.3}Y_{0.1}PS_{4.5}Cl_{0.8}Br_{0.8} | O | X | 1.5 |
| Comp. Ex. 4 | 430, 8 h | Li_{6.15}La_{0.075}P_{0.925}S₅Cl | △ | X | 0.09 |

| | | | | | |
|---|---|---|---|---|---|
| O: exists in a large amount △: exists in a trace amount X: impurities exist in a large amount -: exists little | | | | | |

### [Evaluation]

Each solid electrolyte was evaluated as follows.

### (XRD determination)

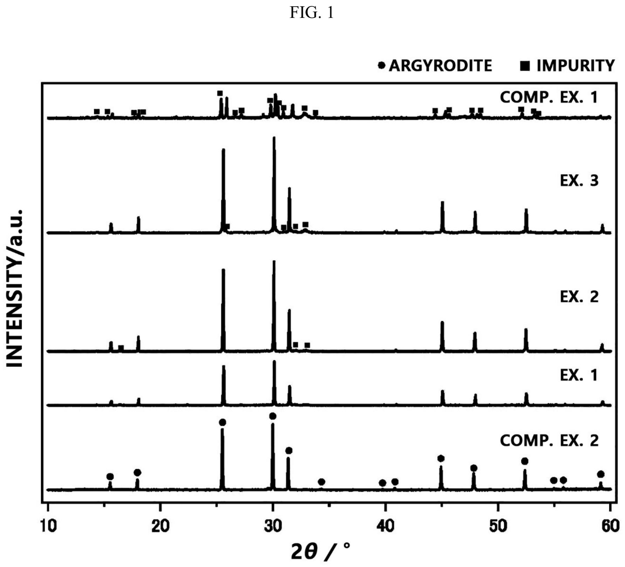

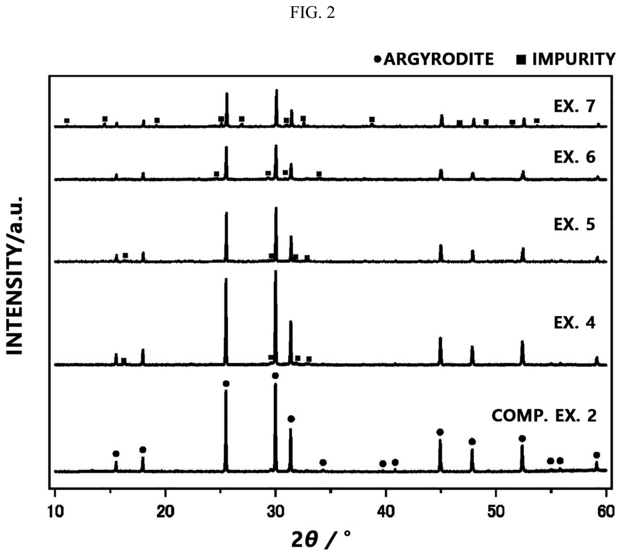

Each solid electrolyte taken in a predetermined amount was introduced to a sealed holder in a glove box under argon gas flow, and X-ray diffractometry (XRD) was carried out. Then, a lattice constant, a lattice volume and a half width were calculated from the resultant XRD (X-ray diffraction) pattern. The half width was calculated from the crystal peak of (311) surface of the argyrodite-type crystal structure observed at around 2θ = 30° in FIG. 1 and FIG. 2.

The determination system and condition are as follows.
- X-ray diffractometry system: Rigaku Smartlab
- Source: Cu-Kα ray (λ = 1.5418 Å)
- Voltage: 45 kV
- Current: 200 mA
- Scan range (2θ: 10-60°)
- Step size: 0.01°

### (Determination of ion conductivity)

Each solid electrolyte taken in a predetermined amount was disposed in a MACOR^{®} pipe, and then a pellet-molding jig (upper press pin and lower press pin) was assembled with the MACOR pipe, and press molding was carried out under 5 MPa by using a monoaxial press. After that, a predetermined amount of gold powder was disposed on both surfaces of the pellets, and a press molding was carried out under 7.5 MPa by using a monoaxial press to obtain a MACOR pipe cell. The resultant MACOR pipe cell was mounted to a jig cell for electrochemical determination, and pressurization was carried out to 5.0 N·m by using a torque wrench to obtain an ion conductivity test cell. The ion conductivity test cell was connected to an impedance analyzer, and the resistance value of the solid electrolyte pellets was measured at room temperature (298K) under ambient pressure (1 atm) to calculate the ion conductivity (mS/cm) of the solid electrolyte.

### (Determination of initial charge/discharge capacity)

First, an NCM (nickel cobalt manganese)-based positive electrode active material having a Ni content of 80 mol% and a solid electrolyte were weighed at a weight ratio of 70:30. Next, 1.5 wt% of carbon black as a conductivity aid was added thereto, followed by mixing, to obtain a positive electrode mixture. The solid electrolyte obtained as described above was weighed in an amount of 80 mg, installed in a molding jig and subjected to press molding under 6 MPa for 1 minute to obtain solid electrolyte pellets. Then, 10 mg of the positive electrode mixture obtained as mentioned above was disposed on one surface of the solid electrolyte pellets, and the press pin made of SUS in the molding jig was pressed to perform planarization, thereby forming a positive electrode layer. After that, an Al plate was disposed on the resultant positive electrode layer, and a press molding was carried out under 30 MPa for 1 minute. Then, Li-Cu foil was disposed on the other surface of the solid electrolyte pellets, opposite to the positive electrode layer, and a press molding was carried out under 2 MPa for 30 seconds. The resultant product was combined with a press pin made of SUS to obtain a MACOR pipe cell. The resultant MACOR pipe cell was installed in a battery cell, and a torque of 2 N·m was applied thereto to obtain an all-solid-state battery cell.

The resultant all-solid-state battery was subjected to a charge/discharge test in a voltage range from 4.25 V to 3.0 V under a charge condition of constant current (CC) (0.05 C)-constant voltage (CV) (0.01 C cut-off) and a discharge condition of CC (0.05 C). Then, the initial charge capacity and initial discharge capacity were obtained from the resultant charge/discharge curve.

### [Evaluation results]

### (Crystalline phase)

The evaluation results of the crystalline phase (crystal structure) identified from the XRD pattern obtained by X-ray diffractometry (XRD) determination are shown in Table 1 and Table 2. In addition, the determined XRD patterns are shown in FIG. 1 and FIG. 2.

As shown in Table 1, in Example 1 and Comparative Example 2, substantially no impurity phase (also referred to as 'unknown phase') is observed, and most peaks are derived from an argyrodite phase. In addition, in Examples 2 to 7, a peak of an argyrodite phase and a trace amount of impurity phase are present. Meanwhile, in Comparative Example 1, substantially no peak of argyrodite phase is observed, and a large amount of impurity phases other than the argyrodite phase is present. For example, the impurity phases are those derived from the source materials, such as Li₂S and Y₂S₃.

As shown in Table 2, in Comparative Example 3, a large amount of impurity phases other than the argyrodite phase is present. In addition, in Comparative Example 4, substantially no argyrodite phase is observed and a large amount of impurity phases is present.

FIG. 1 and FIG. 2 show XRD patterns of Examples 2 to 7 and Comparative Examples 1 and 2. In Example 1 wherein the doping amount (y) of Y as a Group 3 element is 0.0125 and Comparative Example 2 wherein the doping amount (y) of Y as a Group 3 element is 0, substantially only the peaks of the argyrodite phase are observed. In addition, in Examples 2 and 3 wherein the doping amount (y) of Y as a Group 3 element is 0.025 and 0.075, respectively, and Examples 4 to 7 wherein the doping amount (y) of La as a Group 3 element is 0.0125, 0.025, 0.075 and 0.2, respectively, substantially only the peaks of the argyrodite phase are observed, but the peaks of impurities derived from the sources, such as Li₂S, Y₂S₃ and La₂S₃ are also observed. Meanwhile, in Comparative Example 1 wherein the doping amount (y) of Y as a Group 3 element is 0.2, substantially no peak of argyrodite phase is observed, and the peaks of a large amount of impurity phases are observed.

In Examples 2 to 7 and Comparative Example 2, a sulfide-based solid electrolyte having an argyrodite-type crystal structure with little or no impurity phase is obtained. A sulfide-based solid electrolyte having a high degree of crystallization accelerates hopping conduction of lithium ions, and thus may contribute to improvement of ion conductivity.

### (Lattice volume)

With reference to the lattice constant derived from the XRD pattern, Examples show a range of 9.8518-9.8773 Å, while the lattice volume is in a range of 956.2-963.6 Å³. Meanwhile, in Comparative Example 1 wherein the doping amount (y) of Y as a Group 3 element is 0.2, it is not possible to determine the lattice constant due to a large amount of impurities. In addition, in Comparative Example 2 wherein the lithium site of the sulfide-based solid electrolyte is not substituted with a Group 3 element (M), the lattice constant is 9.9471 Å, and the lattice volume is 984.2 Å³. It is shown that substitution with the lithium site of the argyrodite-type crystal structure with a Group 3 element (M) causes a decrease in lattice volume of about 2.1-2.8%. Although it is not bound to any specific theory, it is thought that since one of three lithium sites is substituted with a Group 3 element (M) and the others become lithium vacancies, the crystal volume of the sulfide-based solid electrolyte may be changed. It is also thought that the lithium vacancies become a path for hopping conduction of lithium ions, and thus contributes to improvement of ion conductivity. In addition, it is thought that the Group 3 element (M) substituting for the lithium site may be trivalent and may undergo a change in force of drawing anions around the Group 3 element (M) site, as compared to monovalent lithium ions. Therefore, it is thought that the sulfide-based solid electrolyte undergoes a change in crystal volume, and thus is converted into a structure suitable for hopping conduction of lithium ions.

With reference to the half width of the crystal peak of (311) surface of the argyrodite crystal structure, Examples show a range of 0.07° to 0.09°. Meanwhile, Comparative Example 1 does not allow determination of the half width and Comparative Example 2 shows a half width of 0.08°. Particularly, Examples 1 and 2 wherein the doping amount (y) of Y as a Group 3 element (M) is 0.0125 and 0.025, respectively, and Example 5 wherein the doping amount (y) of La as a Group 3 element (M) is 0.025 show a small half width of 0.07° and a high ion conductivity of 10.8 mS/cm or more. It is thought that such a small half width corresponds to a large crystallite size and contributes to improvement of ion conductivity.

### (Ion conductivity)

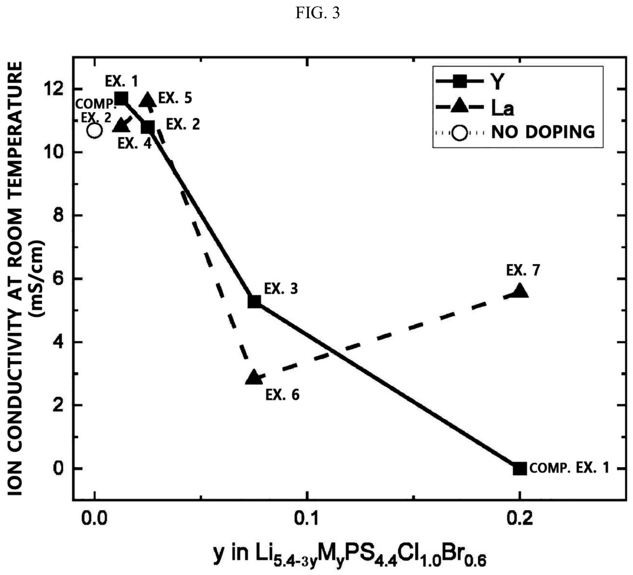

The results of ion conductivity determination are shown in Tables 1 and 2. In addition, FIG. 3 is a graph plotted by taking the doping amount (y) of a Group 3 element (M) in the composition Li_{5.4-3y}M_{y}PS_{4.4}Cl_{1.0}Br_{0.6} of a sulfide-based solid electrolyte as the transverse axis and taking the ion conductivity determined at 25°C under ambient pressure as the vertical axis. Each point in FIG. 3 corresponds to each of Examples 1 to 3 and Comparative Example 1 doped with Y as a Group 3 element (M), Examples 4 to 7 doped with La as a Group 3 element (M), and Comparative Example 2 not doped with a Group 3 element (M) (corresponding to 'no doping' in the drawing).

As can be seen from FIG. 3 and Table 1, Examples 2 to 7 show an ion conductivity of 2.84-11.7 mS/cm. In Example 1 wherein the doping amount (y) of Y as a Group 3 element (M) is 0.0125, the ion conductivity shows the highest value, 11.7 mS/cm. Meanwhile, Comparative Example 1 wherein the doping amount (y) of Y as a Group 3 element (M) is 0.2, the ion conductivity is 0.000061 mS/cm. As such, the ion conductivity of each Example can be increased as compared to the ion conductivity of Comparative Example 1. It is thought that the doping amount (y) of Y as a Group 3 element (M) is excessively large in Comparative Example 1, and thus the degree of crystallization of the argyrodite-type crystal structure is lowered to cause a decrease in ion conductivity.

In Comparative example 2 wherein no Group 3 element (M) is doped shows an ion conductivity of 10.7 mS/cm. Examples 1 and 2 wherein the doping amount (y) of Y as a Group 3 element (M) satisfies y ≤ 0.025 and Examples 4 and 5 wherein the doping amount (y) of La as a Group 3 element (M) satisfies y ≤ 0.025 show an ion conductivity of 10.8 mS/cm or more, which is higher as compared to Comparative Example 2. It is thought that such an increase in ion conductivity results from an increase in degree of crystallization of the argyrodite-type crystal structure caused by a decrease in impurities present in the sulfide-based solid electrolyte. However, as can be seen from the XRD results of FIG. 1, FIG. 2 and Table 1, Examples 2, 4 and 5 realizing a higher ion conductivity as compared to Comparative Example 2 include a larger amount of impurities as compared to Comparative Example 2. In other words, Examples 2, 4 and 5 realizing a higher ion conductivity as compared to Comparative Example 2 show a lower degree of crystallization as compared to Comparative Example 2. Therefore, it can be seen from the above results that not only the degree of crystallization of the argyrodite-type crystal structure but also the presence of a Group 3 element (M) affects the ion conductivity.

As can be seen from Table 2, Comparative Example 3 with a different stoichiometric composition shows an ion conductivity of 1.5 mS/cm. Comparative Example 4 with a different stoichiometric composition shows an ion conductivity of 0.09 mS/cm. It is thought that since the degree of crystallization of the argyrodite-type crystal structure is lowered and a large amount of impurities is present, the ion conductivity is decreased.

### (Battery characteristics)

When the sulfide-based solid electrolyte according to Example 1 was used in an all- solid-state battery, the sulfide-based solid electrolyte showed high stability to lithium metal as a negative electrode material, and the all-solid-state battery showed excellent charge/discharge characteristics and capacity characteristics. The relative ratio of the capacity of an all-solid-state battery using the solid electrolyte of Example 1 based on the capacity of an all-solid-state battery using the sulfide-based solid electrolyte of Comparative Example 2 not doped with a Group 3 element was 105%, as expressed by a relative ratio of the initial discharge capacity. In addition, when the sulfide-based solid electrolyte of Example 5 was used in an all-solid-state battery, the sulfide-based solid electrolyte showed high stability to lithium metal as a negative electrode material, and the all-solid-state battery showed excellent charge/discharge characteristics and capacity characteristics. The relative ratio of the capacity of an all-solid-state battery using the solid electrolyte of Example 5 based on the capacity of an all-solid-state battery using the sulfide-based solid electrolyte of Comparative Example 2 not doped with a Group 3 element was 106%, as expressed by a relative ratio of the initial discharge capacity. In other words, it is possible to improve the initial discharge capacity of an all-solid-state battery by using the solid electrolyte of each of Examples 1 and 5 having high ion conductivity in the all-solid-state battery.

The present disclosure has been hereinabove described with regard to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

## Claims

1. A sulfide-based solid electrolyte containing a Group 3 element and having an argyrodite-type crystal structure,
the sulfide-based solid electrolyte being represented by the chemical formula of Li_{7-x-3y}M_{y}PS₆₋ₓHaₓ,
wherein M is at least one element selected from Group 3 elements, Ha is at least one element selected from halogen elements, and x and y satisfy 1.0 < x < 2.5 and 0 < y ≤ 0.2.

2. The sulfide-based solid electrolyte according to claim 1,
wherein M is Y and 0 < y < 0.2.

3. The sulfide-based solid electrolyte according to claim 1,
Wherein M is La.

4. The sulfide-based solid electrolyte according to claim 2 or 3,
wherein y satisfies 0 < y < 0.05.

5. The sulfide-based solid electrolyte according to claim 1,
wherein Ha comprises Br.

6. The sulfide-based solid electrolyte according to claim 1,
wherein x satisfies 1.3 ≤ x ≤ 2.0.

7. The sulfide-based solid electrolyte according to claim 1,
which has a lattice volume of 940-980 Å³.

8. A method for preparing the sulfide-based solid electrolyte as defined in claim 1, comprising the steps of:
mixing a lithium source, a Group 3 element source, a phosphorus source and a halogen source to obtain a mixture, and
firing the mixture at a temperature of 250-600°C.

9. An all-solid-state battery comprising a positive electrode, a negative electrode and a solid electrolyte layer,
wherein the solid electrolyte layer comprises the sulfide-based solid electrolyte as defined in claim 1.
